# EUROPEAN PATENT APPLICATION

(11) **EP 4 570 956 A1**
(43) Date of publication of application: **18.06.2025**
(21) Application number: 23216613.2
(22) Date of filing: 14.12.2023
(51) Int. Cl.: C25B 1/042, C25B 9/19, C25B 9/77, C25B 15/027, C25B 15/00, C25B 15/08, H01M 8/18

(54) **ELECTROCHEMICAL SYSTEM FOR RUNNING IN HOT IDLING MODE**

(71) Applicant: SolydEra SA, 1400 Yverdon-les-Bains (CH)
(72) Inventor: Wuilliemin, Zacharie, 1096 Cully (CH); Waeber, Florian, 1266 Duillier (CH); Ouweltjes, Jan Pieter, 1004 Lausanne (CH)
(74) Representative: Hepp Wenger Ryffel AG

(57) **Abstract**

The invention refers to an electrochemical system (1) suitable for hot idling comprising
- at least one electrochemical module (11) comprising a fuel electrode section, an oxidant electrode section, and a membrane;
- at least one fluid inlet line (10) leading to the electrochemical module (11), in particular to the fuel electrode section;
- at least one fluid outlet line (12) exiting the electrochemical module (11);
- a gas recirculation unit (15) to recirculate a gas or gas mixture exiting the electrochemical module (11) to the fuel electrode section.

The system comprises an inert gas unit (3), preferably nitrogen unit, for supplying inert gas to the at least one fluid inlet line (10). The invention refers also to a method of performing electrolysis in a hot idling mode.

## Description

The invention relates to an electrochemical system for hot idling and a method of performing electrolysis in hot idling mode according to the preamble of the independent claims.

High temperature reactors such as SOEC systems rely on the availability of electric power and reactants (commonly steam). In particular, the use of intermittent power, with its unpredictable or cyclic nature, poses a problem in the operation of such systems as rapid cooling and heating is typically not possible due to the mechanical vulnerability of the used materials and/or the system's thermal inertia. In order to quickly come back in operation after periods with insufficient power, the electrolyser is therefore preferably kept in a hot stand-by mode, which is particularly demanding due to the risk of oxidation of metallic components such as the fuel electrode (commonly nickel), which kinetically proceeds faster with increasing temperature and that may lead to deterioration or even mechanical damage of the electrochemical cell when the supply of protective gas is not properly handled.

Alternatively, hot idling may be desired during periods where fuel production or power production is not required.

Solutions to prevent oxidation of the fuel electrode have been reported. Apart from options where inert or reducing gas, usually coming from gas bottles, is flushed through the fuel electrode section during stand-by, Bednarz et al (US20050095469) have suggested the use of steam that, during hot idling events, is converted to hydrogen in the electrochemical reactor by imposing a voltage across the electrochemical cells such that oxygen is electrochemically extracted from the steam, where the in-situ formed hydrogen maintains a low enough oxygen partial pressure at the fuel electrode. Heiredal-Clausen et al (EP2811568B1) have further disclosed a method that relies on imposing a voltage across the electrochemical cell that overcomes the redox potential at which metallic nickel is converted to nickel oxide, without flowing gas along the fuel electrode.

What is lacking in prior art are the economic aspects of systems that rely on the above solutions, in particular in relation to effectively preventing oxidant from entering the fuel electrode section. Such gas cross-over is likely because of the inevitable risk of imperfections in the gas tightness of the ionic membranes in the electrolyser cells, and of the sealants that are used in stacks that accommodate such cells.

In order to suppress gas cross-over, a pressure differential is thus preferably maintained between the fuel electrode and the oxidant electrode, which are disposed directly adjacent to the electrolyte, where reactants supplied to the fuel electrode are in overpressure. In case insufficient gas is supplied to the fuel electrode during hot idling, more electric power will be needed to prevent oxidation of the metallic component, as oxidative gas that is available at the oxygen electrode will more easily enter the fuel electrode section.

In the case of Bednarz, where steam is used as the main source of hydrogen, this would imply that sufficient steam needs to be supplied to the reactor to maintain fuel electrode overpressure, as well as considerable electrochemical conversion to hydrogen to maintain a low enough oxygen partial pressure.

In the case of Heiredal, where safe operation relies on providing electric power alone, problems may arise, for example, from the fact that the metallic particles may exist in the fuel electrode microstructure that are not electrically connected to neighbouring metallic particles, and thus not benefit from cathodic protection. Another problem may arise from the fact that overpotential is usually not imposed to individual cells in a stack, but to the stack itself. Consequently, the imposed stack voltage has to freely distribute between the respective repeating units in the stack, where the voltage across may vary from one repeating unit to the other, for example because of a spread in the internal resistance from cell to cell, or due to local mass transport issues. In particular, stacks that have been operated for longer times, where fuel electrode microstructures have evolved, and resistive layers may have formed, are considered cumbersome in maintaining cathodic protection without flowing protective gases.

It is therefore at least one objective of the present invention to overcome the drawbacks of the prior art. It is in particular one objective to provide an electrochemical system suitable for running in hot idling mode which is economically efficient. It is also an objective to provide a method for performing electrolysis in a hot idling mode.

The objectives are solved by the subject-matter of the independent claims. Preferred embodiments are described with regard to the dependent claims.

A first aspect of the invention refers to an electrochemical system suitable for hot idling. The system comprises:
- at least one electrochemical module comprising a fuel electrode section, an oxidant electrode section, and a membrane;
- at least one fluid inlet line leading to the electrochemical module, in particular to the fuel electrode section,
- at least one fluid outlet line exiting the electrochemical module,
- a gas recirculation unit to recirculate a gas or gas mixture exiting the electrochemical module to the fuel electrode section.

The system comprises an inert gas unit, preferably nitrogen unit, for supplying inert gas to the at least one fluid inlet line.

The method is particularly advantageous if the fuel electrode is made of metal or metal alloy, in particular a metal or metal alloy that is prone to oxidation, such as nickel or nickel alloy.

The fluid is preferably steam or a mixture of steam and/or nitrogen and/or hydrogen.

With "section", parts of the electrochemical module are meant, that are exposed to the same fluid. For example, the fuel electrode section is exposed to a first fluid, the oxidant electrode section is exposed to a second fluid. The fuel electrode section comprises the fuel electrode and the oxidant electrode section comprises the oxidant electrode.

The electrochemical module can also be called electrochemical cell or electrolyser cell in case of a single arrangement or electrochemical reactor in case of multiple electrochemical cells. It can be a high-temperature electrochemical reactor, preferably a solid oxide cell reactor. The electrochemical module can comprise a variety of stacks.

The system allows addition of inert gas to the steam which reduces the use of electric power to drive the electrochemical reaction to convert steam into hydrogen. It allows for an inert gas production on site. The total flow of gas is sufficient to suppress the ingress of gas that is present at the oxidant electrode.

The system has the advantage that it can quickly respond to fluctuations in the supplied power. Fluctuating power may be caused by insufficient production from renewable sources such as wind. For example, 10 % of the normal power supply may not be sufficient to convert steam to hydrogen but it may be sufficient to run the device during hot idling.

The recirculation unit allows the use of inert gas of less quality, in particular when oxygen gas impurities are present. The recirculation of at least a part of the gas may protect the fuel electrode. With this, hydrogen that exists in the gas that is exiting the electrochemical module will contribute to maintain a low enough oxygen partial pressure in the fuel electrode section, in particular at the entrance site of the electrochemical module.

It was surprisingly found that inert gas of less quality still allows a very efficient run of electrochemical devices in hot idling mode. It can be even more efficient than pure nitrogen as it is typically less cost prohibitive.

The system can comprise a sweep gas unit to remove oxidizing fluid produced in the electrochemical module. The sweep gas can be air, nitrogen or even oxygen.

Advantageously, the inert gas unit is an inert gas production unit comprising a polymeric membrane, wherein the polymeric membrane has different diffusion rates for different gas compounds of a gas mixture to obtain an inert gas stream, and in particular separates nitrogen from other gas compounds existing in air to obtain a nitrogen gas stream.

Nitrogen is abundantly available in air, from which it can be extracted. The use of a unit comprising polymeric membranes is particularly advantageous for its rapid start-up, and its relatively low operation costs including relatively low consumption of electrical power. It can be, that the nitrogen obtained with membranes still contains oxygen due to oxygen bleed during the nitrogen separation process. Typically, the oxygen levels in the obtained nitrogen gas can vary between 0.5 and 4 vol. %, the higher oxygen level is usually obtained when the nitrogen membrane is operating at an increased nitrogen production capacity.

Alternatively, the inert gas unit can also be an inert gas production unit comprising oxygen transport membranes to remove oxygen from a gas mixture, in particular air. The obtained nitrogen retentate can comprise some impurities such as noble gases, in particular argon, carbon dioxide and water vapour which are not considered problematic. A particular advantage is, that oxygen is obtained as a side stream, which may find use in other applications.

Alternatively, the inert gas unit comprises cryogenic gases, in particular nitrogen. The cryogenic gas can be stored in a tank or produced on site. However, the use of cryogenic gas is less preferred since it is more cost intense compared to the nitrogen production on site.

The inert gas unit can be located centrally in a plant constituting multiple electrolyser systems to serve a certain number of systems or can be located locally at one electrolyser system.

Advantageously, the electrochemical system comprises a fuel electrode backpressure control. This allows to obtain sufficient overpressure of the fuel electrode gas feed to the oxidant electrode feed. A suitable overpressure of the fuel electrode feed can be in the range of 2 to 100 mbar, more preferably between 2 and 20 mbar. Though in certain cases higher overpressure would be possible, it may at some point compromise the mechanical integrity of the electrolyser cell respectively electrochemical module and should therefore be avoided.

The fuel electrode section is preferably kept in overpressure compared to the oxidant electrode section.

The system may be equipped with backup power means. The backup power means can be a battery or a generator, in particular an emergency power generator. If the hot idling mode cannot be sustained, the system can rely on a power back up.

The electrochemical module preferably comprises at least one temperature sensor and temperature regulation means to control the temperature of electrochemical module, for example an electric heater of which the heat production is controlled by control logic that involves a temperature setpoint and a feedback loop that reads the actual module temperature.

Another aspect of the invention refers to a method for performing electrolysis in a hot idling mode. The method comprises the steps of:
a) Providing an electrochemical system as previously described,
b) Providing a steam flow to the electrochemical module to supply steam to the fuel electrode,
c) Provide an inert gas flow to the steam flow to maintain a constant flow to the fuel electrode,
d) Controlling the temperature of the electrochemical module, such that the temperature of the module is kept close to its normal operation temperature,
e) Operating the electrochemical module under potentiostatic conditions at which steam is at least partially converted to hydrogen, for example at thermoneutral conditions.

If the system can come back to normal operation mode, the steps can be followed in reverse order while preferably safeguarding the pressure differential. Preferably, the inert gas flow in step c) is replacing the steam flow stepwise while a constant flow is maintained.

The term "normal operation temperature" in step d) refers to the temperature at which the electrochemical module is preferably working, in particular a temperature above 680°C. A normal operating temperature for electrochemical modules is usually between 720 and 780°C. Preferably, hot idling takes preferably place above auto-ignition temperature of the fuel compounds, in particular the gas compounds such as hydrogen, that are present in the electrochemical reactor. In such case, in the event of failure where fuel escapes from the electrochemical reactor, the one or more fuel compounds will not give rise to explosion hazards.

Potentiostaic conditions are conditions where the reactor is operated at a constant voltage, where the electric current that flows through the reactor is determined by the internal resistance of the reactor. It follows the principles of Ohm's law (V = I * R).

Potentiostatic control is preferred over galvanostatic control. This will allow for preventing overloads, when too high electric current is imposed on the stack, or insufficient cathodic protection of the fuel electrode, in case of too low current is imposed on the stack of the electrochemical module. It further contributes in maintain the stack temperature.

By "at least partially converted" is meant, that enough hydrogen from steam is produced such that the partial oxygen pressure (pO2) of the gas is below the point where metal parts in the electrochemical module, e.g. oxidizable metal electrocatalyst or nickel electrodes, may be oxidize. For example, in a mixture of hydrogen and steam, the risk of nickel oxidation can also be expressed as the ratio between the hydrogen partial pressure and the steam partial pressure, where at 600 degrees oxidation will take place when the pH/pH₂O ratio falls below 0.0045 and when the pH2/pH₂O ratio at 900 degrees falls below 0.0075. Depending on the temperature of hot idling the ratio may change. The higher the temperature, the more hydrogen has to be applied to avoid oxidation.

Preferably, the inert gas in step c) is nitrogen with a purity of at least 96 %.

The pressure differential between the fuel electrode section and the oxidant electrode section can be controlled, preferably such that the fuel electrode section is in overpressure compared to the oxidant electrode section.

The overpressure of the fuel electrode section can be in the range of 2 to 100 mbar, preferably 2 to 20 mbar.

Advantageously, a gas or a mixture of gases exiting the electrochemical module is used as co-feed to the steam flow and recirculated to the fuel electrode section.

The heat from a gas or a mixture of gases exiting the electrochemical module can be supplied to the inert gas unit, preferably via a heat exchanger, to produce the inert gas. The inert gas production unit would thus benefit from operations at elevated temperature.

The method can also be applied to electrochemical systems used for power production, or reversible electrolyser-fuel cell systems.

The invention will be described in more detail based on figures and examples. The figures and examples are exemplary embodiments and shall not be understood as limiting. It shows:

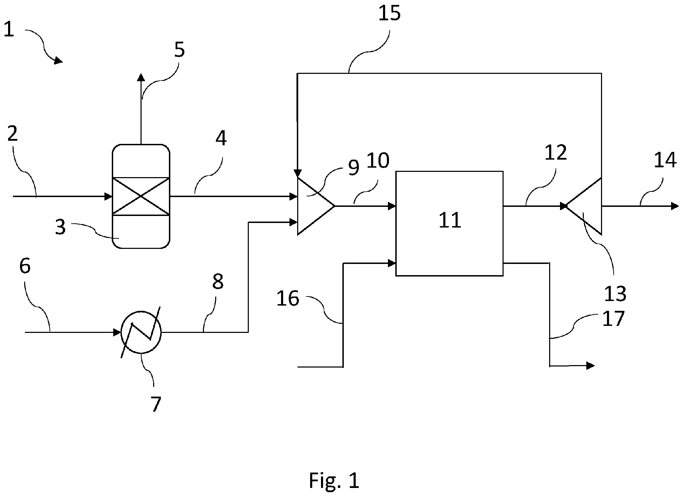

- Figure 1: A schematic representation of an SOEC system according to the invention.

Figure 1 shows a schematic representation of an SOEC system 1 according to the invention. In a first fluid line air 2 is provided to an inert gas nitrogen unit 3 in which nitrogen 4 is produced. The by-products 5 of the nitrogen production are removed from the system. In a second fluid line water 6 is provided to an evaporation unit 7 to produce steam 8. The steam 8 and the nitrogen rich flow 4 are combined at mixing point 9 such that the nitrogen 4 is replacing stepwise the steam 8. The total flow is kept constant throughout the system. The mixture of steam 8 and nitrogen 4 is provided via a fluid inlet line 10 to the electrochemical module 11. The converted gas is exiting the electrochemical module 11 via a fluid outlet line 12. At separating point 13, the off gas 14 is at least partially redirected and fed into the steam line via a recirculation unit 15. Further, the system 1 is equipped with a sweep gas unit providing sweep gas via a second fluid inlet line to the electrochemical module 11 to remove undesired gas produced in the electrochemical module 11. The gas mixture of sweep gas and undesired gas products is removed through an additional fluid outlet line 17 from the electrochemical module 11.

### Example

To illustrate the power consumption of a system according to the invention deploying high temperature electrolyser cells during hot idling, simulations were conducted to have a first approximation of the feasibility of the method. Firstly, a 100 kW SOEC system is considered, including a nitrogen production unit to obtain nitrogen, as well as a recirculation unit. In case, nitrogen gas is used that contains 1 vol% oxygen O₂, and 70 % recirculated gas is used, the following power consumptions are anticipated for hot idling, whilst keeping the pressure ratio of pH₂/pH₂O above 0.0045 by imposing a voltage of 1.3 Volt across the electrolyser cell to keep the nickel metal of the fuel electrode in a reduced state:
- Target steam flow 2.0 slm (standard liter per minute?)
- Air flow to nitrogen production unit 101 slm
- Power consumption for steam production from water 216 Watt
- Power consumption for nitrogen separation 136 Watt
- Power consumption for in situ hydrogen production 235 Watt
- Power consumption for gas recirculation 67 Watt

Altogether, the power consumption would sum up to 655 Watt. This does not include any power consumption related to pre-heating the gases and due to imperfect heat insultation of the system.

Secondly and similarly, in case nitrogen is produced with 4 vol% O₂, requiring 50 Watt to produce nitrogen, the power consumption will increase to 1220 Watt. Thus, nitrogen with less than 1 vol % would require less electric power.

Thirdly, a similar system including a gas recirculation system would deploy cryogenic gases, for example nitrogen and hydrogen gas, assuming 0,36 kWh power consumption per Nm³. The system would approximately consume 1800 Watt of electric power. The energy consumption of the cryogenic process included, whilst power consumption of steam production and in situ hydrogen formation is avoided. Thus, nitrogen with 4 Vol % O₂ would still outperform the power consumption that involves a cryogenic production route.

In real applications, the power consumption might slightly vary from the above simulations but would still be valid in a relative sense.

As can be determined from the examples above, the use of less pure nitrogen than cryogenic nitrogen still allows the application of hot idling. The advantage of using nitrogen production unit on site is a less cost intense supply of nitrogen and still, it shows an even lower power consumption for hot idling than using pure cryogenic nitrogen. This makes the whole system more cost and economically efficient compared to system with pure nitrogen.

A typical method to perform hot idling with a high temperature electrolyser fed with steam including off-gas recirculation, and hot idling including gas recirculation can be described as follows:
- Whilst operating the electrolyser stack normally when hot idling is imminent, start the nitrogen production system until a stable nitrogen flow with at least 96 % purity is obtained;
- Whilst operating the electrolyser stack under potentiostatic conditions, preferably at or around 1.3 Volt, stepwise replace the steam that is supplied to the fuel electrode by nitrogen, preferably keeping the total flow constant. In case, lower flow is aimed for during hot idling, the pressure differential between the fuel electrode section and the oxidant electrode section should be controlled.
- Whilst keeping the electrolyser in hot idling mode, the temperatures of the incoming gases should be controlled. The electrolyser cell temperature should preferably be kept above 680°C. Preferably the operating temperature is kept close to normal operation when availability of sufficient power is imminent.

In order to come back to the normal operation, the steps mentioned above can be followed in reversed order while safeguarding the pressure differential.

In prior art, stability issues of the oxidant electrode upon exposure to sweep gas has been reported. However, it is another advantage of the present invention to overcome these issues. Since electricity is supplied to the cells, oxygen can be pumped from the fuel electrode to the oxidant electrode. The oxidant electrode, which typically comprises oxide with a perovskite crystalline structure, such as LSCF or LSC, or oxide with Ruddlesden-Popper crystalline structure such as LNF, can then recombine the oxygen ions to oxygen gas at the surface of the porous oxidant electrode structure, which protects the oxidant electrode surface from becoming oxygen deficient. This is a likely risk, as the oxygen mobility in the typical oxidant electrode materials is high.

## Claims

1. An electrochemical system (1) suitable for hot idling comprising
- at least one electrochemical module (11) comprising a fuel electrode section, an oxidant electrode section, and a membrane;
- at least one fluid inlet line (10) leading to the electrochemical module (11), in particular to the fuel electrode section;
- at least one fluid outlet line (12) exiting the electrochemical module (11);
- a gas recirculation unit (15) to recirculate a gas or gas mixture exiting the electrochemical module (11) to the fuel electrode section;
**characterized in that** the system comprises an inert gas unit (3), preferably nitrogen unit, for supplying inert gas to the at least one fluid inlet line (10).

2. An electrochemical system (1) according to claim 1, wherein the system (1) comprises a sweep gas unit (16, 17) to remove oxidizing fluid produced in the electrochemical module (11) .

3. The electrochemical system (1) according to claim 1 or 2,
wherein the inert gas unit (3) is an inert gas production unit comprising a polymeric membrane, wherein the polymeric membrane has different diffusion rates for different gas compounds of a gas mixture to obtain an inert gas stream, and in particular separates nitrogen (4) from other gas compounds existing in air (2) to obtain a nitrogen gas stream (4).

4. The electrochemical system (1) according to claim 1 or 2, wherein the inert gas unit (3) is an inert gas production unit comprising oxygen transport membranes to remove oxygen from a gas mixture, in particular air.

5. The electrochemical system (1) according to claim 1 or 2, wherein the inert gas unit (3) comprises cryogenic gases, in particular nitrogen.

6. The electrochemical system (1) according to one of the previous claims, wherein the system (1) comprises a fuel electrode backpressure control.

7. The electrochemical system (1) according to one of the previous claims wherein the fuel electrode section is kept in overpressure compared to the oxidant electrode section.

8. The electrochemical system (1) according to one of the previous claims, wherein the system (1) is equipped with backup power means.

9. The electrochemical system (1) according to one of the previous claims, wherein the electrochemical module (11) comprises at least one temperature sensor and temperature regulation means to control the temperature of electrochemical module (11).

10. A method for performing electrolysis in a hot idling mode comprising the steps of:
a) Providing an electrochemical system (1) according to one of claims 1 to 9,
b) Providing a steam flow (8) to the electrochemical module (11) to supply steam to the fuel electrode,
c) Provide an inert gas flow (4) to the steam flow (8) to maintain a constant flow to the fuel electrode,
d) Controlling the temperature of the electrochemical module (11), such that the temperature of the module (11) is kept close to its normal operation temperature,
e) Operating the electrochemical module (11) under potentiostatic conditions at which steam (8) is at least partially converted to hydrogen, for example at thermoneutral conditions.

11. A method according to claim 10, wherein the inert gas (4) in step c) is nitrogen with a purity of at least 96 %.

12. Method according to one of claims 10 to 11, wherein the pressure differential between the fuel electrode section and the oxidant electrode section is controlled, preferably such that the fuel electrode section is in overpressure compared to the oxidant electrode section.

13. Method according to claim 12, wherein the overpressure of the fuel electrode section is in the range of 2 to 100 mbar, preferably 2 to 20 mbar.

14. Method according to one of claims 10 to 13, wherein a gas or a mixture of gases exiting the electrochemical module is used as co-feed to the steam flow (8) and recirculated to the fuel electrode section.

15. Method according to one of claims 10 to 14, wherein heat from a gas or a mixture of gases exiting the electrochemical module (11) is supplied to the inert gas unit (3), preferably via a heat exchanger.
